# EUROPEAN PATENT APPLICATION

(11) **EP 4 286 092 A1**
(43) Date of publication of application: **06.12.2023**
(21) Application number: 23175894.7
(22) Date of filing: 29.05.2023
(51) Int. Cl.: B23Q 1/54, B25J 9/04

(54) **SUPPORT AND HANDLING UNIT**

(30) Priority: 30.05.2022 IT 202200011408
(71) Applicant: Italgantry s.r.l., 14100 Asti (IT)
(72) Inventor: MAZZEO, Gianni Francesco, 14100 ASTI (IT)
(74) Representative: Studio Torta S.p.A.

(57) **Abstract**

A support and handling unit (1) has a frame (3) elongated in a longitudinal direction (4) and two articulated arms (8) arranged at a distance from each other along the longitudinal direction (4); each articulated arm (8) has a respective crank (9) hinged to the frame (3) to rotate about a fixed hinge axis (12) and a respective connecting rod (14), which is hinged to the respective crank (8) to rotate relative to the respective crank (8) about a movable hinge axis (15) and carries a connection head (19) to support and handle an object (2); first motors (11) being provided to rotate the cranks (8) about the fixed hinge axis (12), second electric motors (16) being provided to rotate the connecting rods (14) about the respective movable hinge axes (15), and at least one third electric motor (21) being provided to rotate the connection head (19) relative to the corresponding connecting rod (14).

## Description

### CROSS-REFERENCE TO RELATED APPLICATIONS

This patent application claims priority from Italian patent application no. 102022000011408 filed on May 30, 2022, the entire disclosure of which is incorporated herein by reference.

### TECHNICAL FIELD

The present invention relates to a support and handling unit for an object.

### BACKGROUND

The term "object" here and hereafter is to be understood as any object, whether it is a semi-finished or finished product or a tool or tools or a machining head, a forming head, a dosing head, or a wrapping and packaging head, or still, gripping equipment, support and handling equipment, or storage equipment for any element or item.

In general, the present invention finds advantageous application in all those fields in which the handling of an object in a processing station and/or the movement of the object along predefined, straight or circular paths, or a combination thereof, is required either on a surface or in space.

For the handling of objects, tools or equipment in general, portal structures are currently used which are provided with a plurality of guide and slide assemblies and/or rotating assemblies, each actuated by a respective electric motor generally associated with a mechanical transmission with belts or cogwheels.

Known portal structures have, on the one hand, relatively high construction and maintenance costs, but above all they are extremely bulky, and this considerably limits and often prevents their use in small spaces.

Document EP2060367A2 illustrates a solution according to the preamble of claim 1, relating to equipment that can transfer a workpiece in a substantially rectilinear direction using two pairs of arms hinged about parallel axes. The rotations of the arms and workpiece are caused by transmissions which are relatively bulky and complex, can be subject to play, and are unable to guarantee a possible 360° rotation.

### SUMMARY

The object of the present invention is to provide a support and handling unit, which allows the above problems to be solved in a simple and inexpensive way.

A particular object of the present invention is to provide a support and handling unit for an object, which has extremely contained dimensions and construction costs, low maintenance costs and is, at the same time, highly efficient and reliable.

According to the present invention, a support and handling unit for an object is provided, as claimed in claim 1.

### BRIEF DESCRIPTION OF THE DRAWINGS

The invention will now be described with reference to the accompanying drawings, which illustrate some nonlimiting embodiments thereof, in which:
- Figure 1 is a schematic, perspective and substantially block-based view of a first embodiment of a support and handling unit for an object made according to the teachings of the present invention;
- Figure 2 is similar to Figure 1 and illustrates a second embodiment of a support and handling unit for an object made according to the teachings of the present invention;
- Figure 3 is similar to Figure 2 and illustrates a third embodiment of a support and handling unit for an object made according to the teachings of the present invention;
- Figure 4 is similar to Figure 3 and illustrates a fourth embodiment of a support and handling unit for an object made according to the teachings of the present invention; and
- Figure 5 is similar to Figure 4 and illustrates a fifth embodiment of a support and handling unit for an object made according to the teachings of the present invention; and
- Figure 6 is similar to Figure 5 and illustrates a variant of a detail in Figure 5.

### DESCRIPTION OF EMBODIMENTS

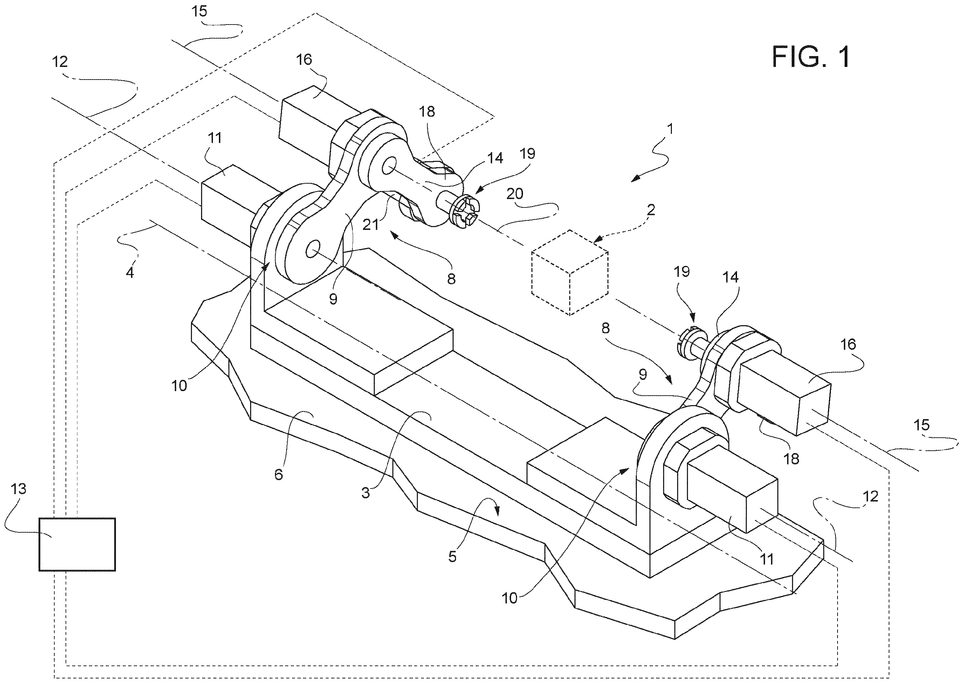

Number 1 in Figure 1 indicates, as a whole, a support and handling unit for supporting and handling any object, which is schematically illustrated and generically indicated with 2.

The term "object" here and hereafter is to be understood as both a body or any element to be moved, positioned, or supported, for example during its processing, but also a device or operational or functional equipment which may or may not be part of the same unit 1, as will be clear from the following.

In all cases, the unit 1 comprises a frame 3, which is elongated in a longitudinal direction 4 and is suitable to be fixed, in a known way, to a connection surface 5 of a fixed or movable support body 6.

In the example shown in Figure 1, the connection surface 5 is horizontal and the frame 3 rests on the surface 5.

Alternatively, the connection surface 5 is vertical and the unit 1 thus protrudes laterally cantilevered from the connection surface 5.

According to another variant, the connection surface 5 is raised from the ground and facing downwards and forms a zero or non-zero angle with a horizontal plane and the unit 1 is therefore hanging from the connection surface 5.

Regardless of the position of the surface 5, the unit 1 comprises, in addition to the frame 3, two articulated arms 8, which are coupled, facing each other, to the frame 3 and are spaced from one another along the longitudinal direction 4.

Each arm 8 comprises a respective crank 9, which is hinged to the frame 3 by a respective hinge 10, known per se, and is rotated by a respective electric motor 11 in opposite directions about a fixed hinge axis 12, which is coincident with the hinge axis of the other crank 9 and parallel to the longitudinal direction 4.

Conveniently, but not necessarily, the motors 11 are arranged externally to the arms 8 coaxially with the fixed axis 12, are supported by the frame 3, and are connected to the cranks 9 either directly or via the interposition of a mechanical transmission.

In any case, the motors 11 are commanded and controlled, for example in pairs, by a control unit 13 configured to synchronize the motors 11 with each other.

Still referring to Figure 1, each arm 8 further comprises a respective connecting rod 14 having an end portion hinged to the respective crank 9 to rotate relative to the latter about a movable hinge axis 15. In the example shown in Figure 1, the movable axes 15 are coincident with each other, due to the synchronization of the motors 11, and are parallel to direction 4 and to the axes 12. Each connecting rod 14 can rotate about the respective movable axis 15 under the action of a respective electric motor 16 carried by the respective crank 9, hence the motor 16 also rotates about the axis 12. Preferably, but not necessarily, each motor 16 is arranged externally to the respective crank 9 coaxially with the respective axis 15 and is coupled to the respective connecting rod 14 either directly or via a mechanical transmission.

These features, in particular the position of the motors 16 on the cranks 9, allow the dimensions to be reduced and the transmission of motion to the connecting rods 14 to be simplified. As a result, the angular positioning can become more accurate and can be brought up to 360° angles.

As with the motors 11, the motors 16 are also commanded and controlled, for example in pairs, by the control unit 13.

Each connecting rod 14 protrudes cantilevered from the respective crank 9 and has a free end 18, which carries a connection head 19 for coupling to the object 2 to be supported and handled.

Each head 19 is selected from a plurality of different connection heads depending on the characteristics of the object 2 to be held and handled, or on the processing to be carried out on the object or, still further, on the function performed by the same object 2. Each head 19 can be configured to also grip the object 2 (and not just to support it).

In each case, each head 19 is coupled to the respective end 18 so that it can rotate about a respective hinge axis 20 parallel to direction 4 and to the axes 12 and 15. The axes 20 are coincident due to the synchronization of the motors 11 and 16.

Still referring to Figure 1, preferably, one of the heads 19 is an idle head, whereas the other of the heads 19 can rotate relative to the respective connecting rod 14 about the axis 20 under the action of an electric motor 21 commanded and controlled by the control unit 13.

As can be seen in the attached figures, the motor 21 is carried by the respective connecting rod 14, so it also rotates about the axes 15 and 12. Preferably, but not necessarily, the motor 21 is arranged externally to the respective connecting rod 14. In particular, the motor 21 is coaxial with the respective axis 20 and coupled to the head 19 either directly or via a mechanical transmission.

These features, in particular the position of the motor 21 on the connecting rod 14, allow the dimensions to be reduced and the transmission of motion to the head 19 to be simplified. As a result, the angular positioning can become more accurate and can be brought up to 360° angles.

According to a variant, not shown, both heads 19 are idle heads, whereas according to a further variant, not shown, both heads 19 are motorized heads controlled and synchronized with each other by the control unit 13.

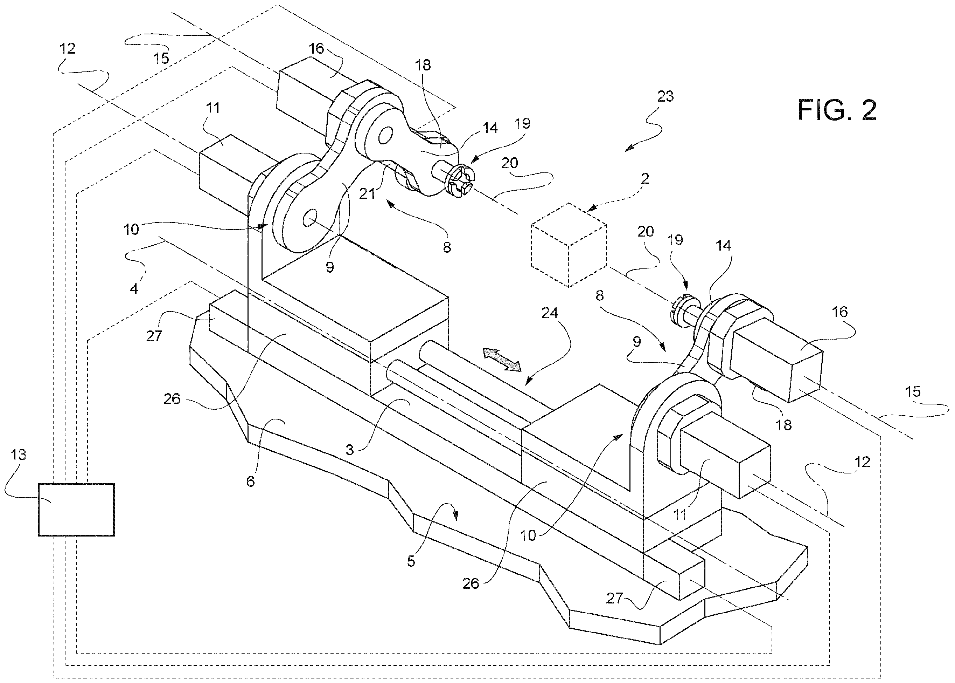

The variant shown in Figure 2 relates to a unit 23, which differs from the unit 1 in that the hinges 10 of the two arms 8 are coupled to the frame 3 by a guide and slide assembly 24 (schematically illustrated) comprising a guide 25 integral with the frame 3 and parallel to direction 4 and, for each hinge 10, a corresponding slide 26, to which the hinge 10 is permanently connected. The guide and slide assembly 24 allows the distance between the arms 8 in the longitudinal direction 4 to be varied depending on the characteristics of the object 2 to be supported and handled. The distance between the arms 8 can be adjusted manually by an operator or by electric motors 27 designed to move the slides 26. The motors 27 are controlled and synchronized with each other by the control unit 13 in order to move both arms 8 in opposite directions or in the same direction parallel to the longitudinal direction 4. Alternatively, the motors 27 are controlled independently of each other in order to move the arms 8 independently of each other.

According to a variant, not shown, only one of the arms 8 is carried by the guide and slide assembly, whereas the other arm 8 is fixed relative to the frame 3 in the longitudinal direction 4. In other words, only one slide 26 is provided, for one of the two hinges 10.

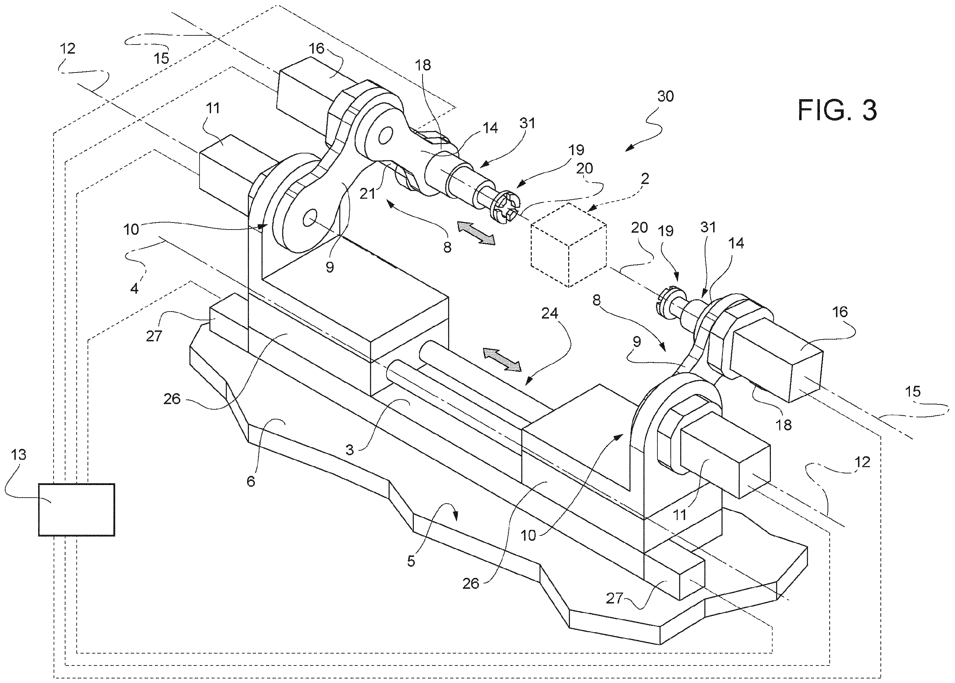

The variant shown in Figure 3 relates to a unit 30, which differs from the units 1 and 23 in that a motorized telescopic joint 31 is arranged between each head 19 and the respective connecting rod 14, which motorized telescopic joint 31, via the control unit 13, is synchronized with the telescopic joint 31 of the other head 19 or can be controlled independently of the other telescopic joint 31, to vary the relative position of the heads 19 in relation to the respective connecting rods 14 along the axes 20. This allows objects of different sizes to be picked up, held and handled without varying the distance between the arms 8.

According to a variant, not shown, only one of the heads 19 is coupled to the respective connecting rod 14 via a telescopic joint 31.

More generally, the telescopic joint 31 defines an axial guidance device, which can be motorized or not and move the head 19 away from/towards the connecting rod 14 along the axis 20.

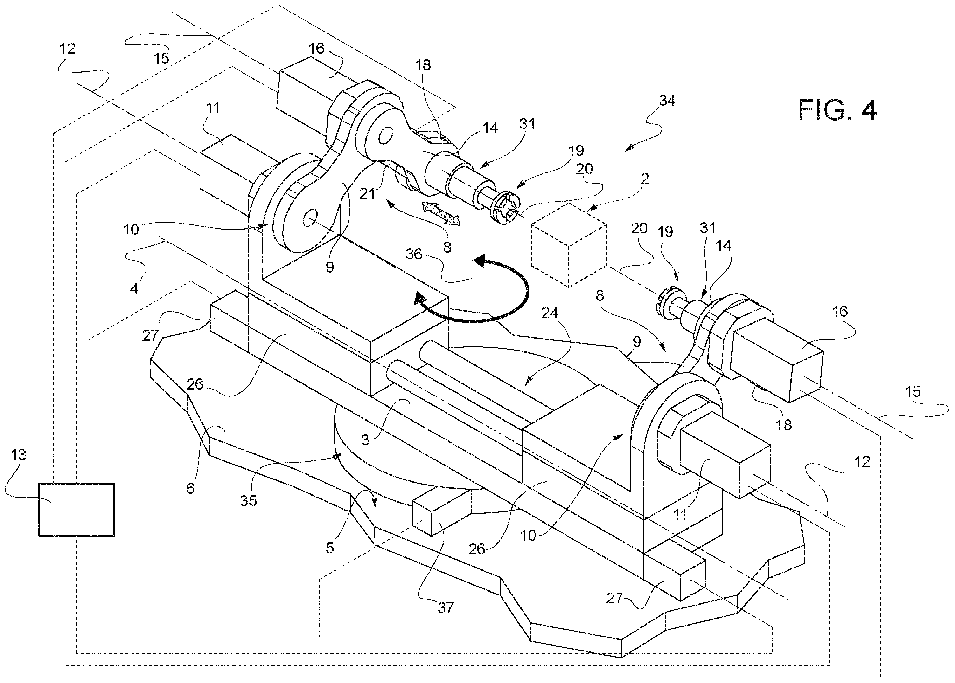

The variant shown in Figure 4 relates to a unit 34, which differs from the units 1, 23, and 30 in that it further comprises a fifth wheel coupling 35 interposed between the frame 3 and the connection body 6 to allow the frame 3 to rotate together with the arms 8 about a fulcrum axis 36 orthogonal to the longitudinal direction 4 and the surface 5.

Conveniently, the fifth wheel coupling 35 is operated by an electric motor 37 controlled by the control unit 13. Alternatively, the fifth wheel coupling 35 is an idle fifth wheel coupling and the rotation of the frame 3 can be manual.

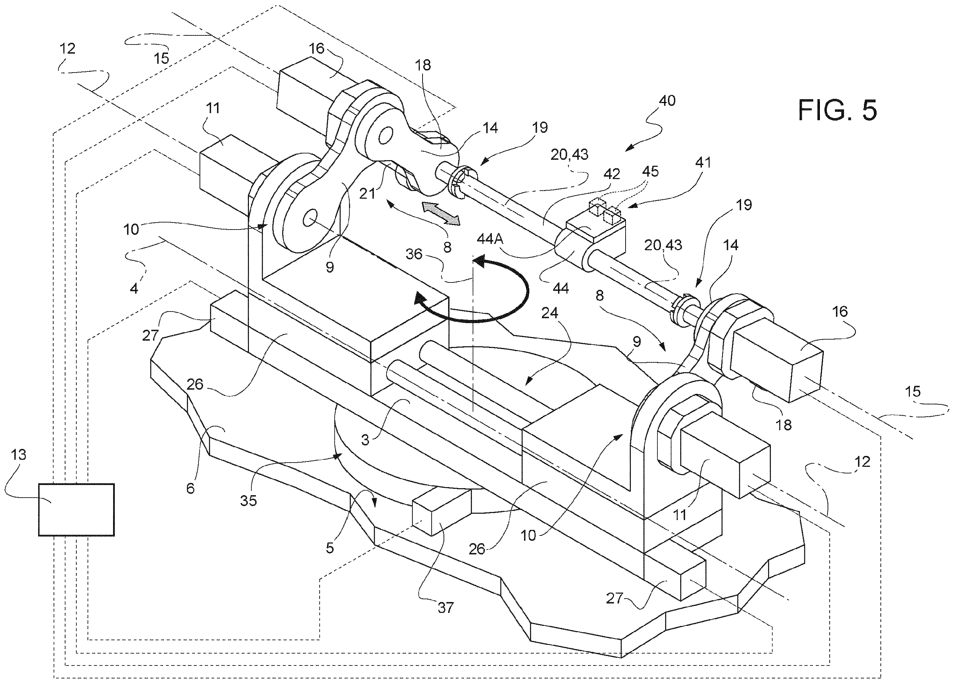

The variant shown in Figure 5 relates to a unit 40, which differs from the unit 34 in that it lacks the telescopic joints 31, like the units 1 and 23, and in that it also includes a equipment 41 for processing, in general, and for mechanical machining, in particular.

In the example described, the equipment 41 is a machining equipment and comprises a rod, bar or crosspiece 42 having opposite end portions coupled to the heads 19 and having an axis 43 coinciding with the axes 20 of the heads 19.

According to a variant, the axis 43 is parallel and eccentric to the axes 20.

In any case, the equipment 41 also includes a support plate 44, which is fixed to the rod 42. One or more tools 45, schematically illustrated, are carried by, and coupled to the plate 44, for mechanical machining or material removal.

Alternatively, the plate 44 carries, and is coupled to, equipment for cleaning, painting, heat or chemical treatment, welding etc....

Therefore, from among the contemplated tools or equipment, the equipment 41 may comprise an interface element or member 44A, which can be selected from a plurality of interface elements or members, whether motorized or not, each dedicated to a specific tool or equipment and, each, coupled to the structure 43 in a fixed or adjustable way.

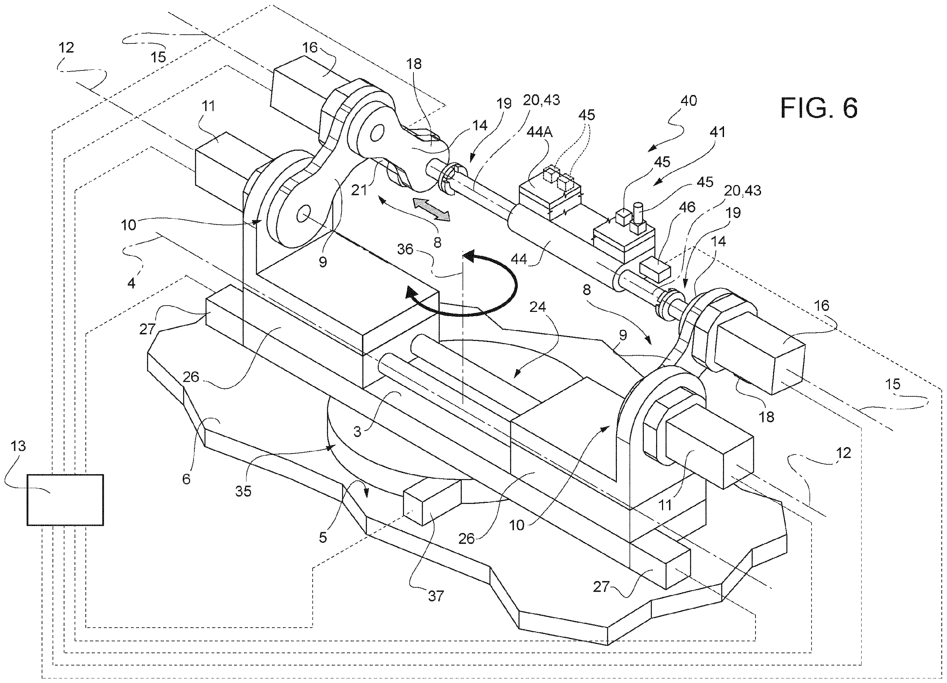

In the variant shown in Figure 6, the structure 44 is coupled to the crosspiece 42 in a sliding way along the axis 43 and is movable in opposite directions under the thrust of an electric motor 46 controlled by the control unit 13.

According to a variant, not shown, the structure 44 can again slide along the axis 43 but be manually moved and locked along the rod 42 into a desired position by a releasable stop member.

According to a further variant, the heads 19 are fixed in relation to the respective connecting rods 9, and the structure 44 is adjustable in relation to the crosspiece 42, either manually or in a motorized manner.

From the foregoing, first of all, it appears that the units 1, 23, 30, 34 and 40 described herein are able to emulate traditional portal structures, i.e., to move and maintain the object 2, or groups equal or similar to the equipment 41, coupled to the heads 19 at least in the same positions in which it can be brought by traditional portal structures with three or more controlled axes. However, this can be attained with extremely smaller dimensions, which allow the above units to be used instead of traditional portal structures, freeing up space that can be used differently, and also to be installed in confined spaces where the known portal structures could not be used.

In particular, the units described herein, precisely because of their compact size, can be installed on board, or associated with, operating machines in general or with robotic arms.

Not only that, but the direct actuation of the various parts in relative motion by means of common electric motors makes it possible, compared to the known solutions, to significantly reduce maintenance costs, indispensable for example in the presence of belt transmissions and runways in general, eliminating the corresponding machine downtime.

In addition, the units 1, 23, 30, 34 and 40 described herein appear to be constructively simple, cost-effective but, at the same time, extremely versatile and quickly adaptable to any shape and/or size or use of the object 2 or equipment 41.

The above is due to the fact that the gripping heads 19, first of all, can be selected from a plurality of gripping heads depending on the characteristics of the object to be supported.

In addition to this, the distance between the heads 19 can be adjusted, for example, by carrying out a rough adjustment by varying the distance between the arms 8 via the guide and slide assembly 24 and, if necessary, through a fine adjustment via the telescopic joints 31, or with only one of the above adjustments.

Not only that, but the heads 19 can support and actuate, or not, operating assemblies already structured and configurable for specific operations or processes, such as the equipment 41.

Not only that, but the same guide and slide assembly 24 and/or telescopic joints 31 make it possible to arrange the gripping heads 19 in a certain relative position along direction 4 and simultaneously move both heads 19 to pick up/deposit or use the object 2 or the equipment 41 in different positions along the longitudinal direction 4.

For these reasons, the units 1, 23, 30, 34 and 40 described above find application in completely different fields or areas, including Pick&Place, dosing and pouring, assembly stations, machine tool management, winding systems, welding systems, painting, etc.

The field of application of the units 1, 23, 30, 34 and 40 described above is, in particular, also broadened by the constructive simplicity of the frame 3, which allows the unit to operate resting on a common surface, but also in a hanging or cantilevered position.

From the above it is clear that modifications and variations can be made to the units 1, 23, 30, 34 and 40 described above without thereby departing from the scope of protection defined by the claims.

In particular, the motor 21 could be missing and/or replaced by a braking or unwinding control system if the unit is used in systems for winding or unwinding tapes on/from rolls of tape.

In addition to this, the actuations of the cranks 9 or connecting rods 14 could be different from those described, just as the telescopic joints 31 could be replaced by a different type of guide and slide device.

Finally, at least part of the electric motors 11, 16, 21, 27 and 37 could be replaced by pneumatic or hydraulic motors.

Lastly, it is clear that the units 30 and 34 could be devoid of the telescopic joints 31, just as the unit 40 could be devoid of the assembly 24 and/or the fifth wheel coupling 35.

## Claims

1. A support and handling unit (1; 23; 30; 34; 40) comprising:
a) a frame (3) elongated in a longitudinal direction (4);
b) two articulated arms (8) arranged at a distance from each other along said longitudinal direction (4); each said articulated arm (8) comprising:
i) a respective crank (9) and
ii) a respective connecting rod (14), having a portion hinged to the respective said crank (9) to rotate relative to the respective said crank (9) about a movable hinge axis (15);
c) for each said crank (9), a respective hinge (10) to allow the respective said crank (9) to rotate in opposite directions with respect to said frame (3) about a fixed hinge axis (12);
d) connection means (19) carried by said connecting rods (14) to support and handle an object; and
e) motorized actuator means comprising:
i) first motorized actuator means to rotate said cranks (9) about said fixed hinge axis (12),
ii) second motorized actuator means to rotate said connecting rods (14) about the respective said movable hinge axes (15); said second motorized actuator means being independent of said first motorized actuator means and comprising, for each said connecting rod (14), a respective motor (16);
**characterized in that** each said motor (16) is carried by the respective crank (9).

2. The unit according to claim 1, wherein each said motor (16) is arranged externally to the respective crank (9) coaxially with the respective movable hinge axis (15) and is coupled to the respective said connecting rod (14) either directly or via a mechanical transmission.

3. The unit according to claim 1 or 2, wherein said motorized actuator means comprise third motorized actuator means carried by at least one of said connecting rods (14) and configured to rotate said connection means (19) about a further movable hinge axis (20) with respect to said connecting rods (14).

4. The unit according to claim 3, wherein said third motorized actuator means are independent of said first and second motorized actuator means.

5. The unit according to claim 3 or 4, wherein said movable hinge axes (15), fixed hinge axis (12), and further movable hinge axis (20) are parallel to one another and to said longitudinal direction (4).

6. The unit according to any one of the preceding claims, wherein said first motorized actuator means comprise, for each said crank (9), a respective first electric motor (11), and wherein said motors (16) define second electric motors.

7. The unit according to any one of the preceding claims, **characterised by** comprising, for at least one of said arms (8), a guide and slide assembly (24) interposed between the respective said hinge (10) and said frame (3) to vary the distance between said arms (8) in said longitudinal direction (4).

8. The unit according to any one of the preceding claims, wherein said connection means (19) comprise first connection elements carried by one of said connecting rods (14) and second connection elements carried by the other of said connecting rods (14); a guide and slide device (31) being associated with at least one of said first and second connection elements to vary the distance between said first and second connection elements in a direction (20,43) parallel to said longitudinal direction (4).

9. The unit according to any one of the preceding claims, **characterised by** comprising a fifth wheel coupling interposed between the frame (3) and a connection structure to allow the frame (3) to rotate about an axis transverse to said fixed hinge axis and movable hinge axes.

10. The unit according to any one of the preceding claims, **characterised by** comprising an equipment configured to carry out at least one machining operation; said equipment being coupled to said connection means (19).

11. The unit according to claim 1 or 2, wherein said connection means (19) comprise two heads (19), which are coupled to respective ends (18) of said connecting rods (14) so they can rotate about respective further movable hinge axes (20), parallel to said longitudinal direction (4) and to said fixed hinge axis (12) and movable hinge axes (15).

12. The unit according to claim 11, wherein at least one of said heads (19) can rotate about the respective further movable hinge axis (20) under the action of a further motor (21), carried by the respective said connecting rod (14).

13. The unit according to claim 12, wherein said further motor (21) is arranged externally to the respective said connecting rod (14).

14. The unit according to claim 12 or 13, wherein said further motor (21) is coaxial with said further movable hinge axis (20) and is coupled to said head (19) either directly or via a mechanical transmission.
